(19) Europäisches Patentamt
European Patent Office
Office européen des brevets

(11) **EP 2 566 119 A1**

(12) **EUROPEAN PATENT APPLICATION**

(43) Date of publication:
**06.03.2013 Bulletin 2013/10**

(21) Application number: **11179179.4**

(22) Date of filing: **29.08.2011**

(51) Int Cl.:
*H04L 25/03* (2006.01)    *H04B 1/713* (2011.01)
*H04L 27/02* (2006.01)    *H04L 27/34* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Panasonic Corporation
Kadoma-shi
Osaka 571-8501 (JP)**

(72) Inventor: **Petrov, Mihail
63225 Langen (DE)**

(74) Representative: **Grünecker, Kinkeldey,
Stockmair & Schwanhäusser
Leopoldstrasse 4
80802 München (DE)**

(54) **Generalized rotated constellations for time-frequency slicing**

(57)    The present invention relates to transmission and reception of digital data in a communication system over a plurality of frequency channels. In particular, digital data coded with an error correcting code are split into symbols and the symbols are grouped into vectors of symbols with a predetermined length. The vectors are transformed with an orthogonal transformation. The transformed vector symbols are then mapped onto the plurality of frequency channels uniformly as far as possible. At the receiver side, a reverse processing may be applied.

**Fig. 3**

## Description

The present invention relates to digital data communications and in particular to the transmission of signals modulated using generalized rotated constellations on multiple radio frequency channels, preferably employing time-frequency slicing.

## BACKGROUND OF THE INVENTION

Random fluctuations of the amplitude of the received signal in digital communication systems are known as fading. Fading is particularly critical in wireless communications when multiple propagation paths of the signal result in propagation delay spread. The received signal may even experience destructive interference. If the delay spread of the channel is larger than the symbol period of the digital signal, the fading is also frequency selective, i.e. signals received on different frequencies will be affected by variously strong fading.

In digital communication systems, the information is encoded as a sequence of symbols belonging to a discrete alphabet, referred to as a constellation. Such a constellation has D dimensions and encodes B information bits per dimension. In particular, the term "constellation" is typically used with reference to the spatial arrangement of the discrete alphabet in the D dimensions. The number of possible values, also referred to as constellation points, is therefore $2^{D \times B}$. The number of bits per dimension B directly determines the spectral efficiency of the transmission, given in bits/s/Hz. The number of dimensions D alone has no effect on the spectral efficiency.

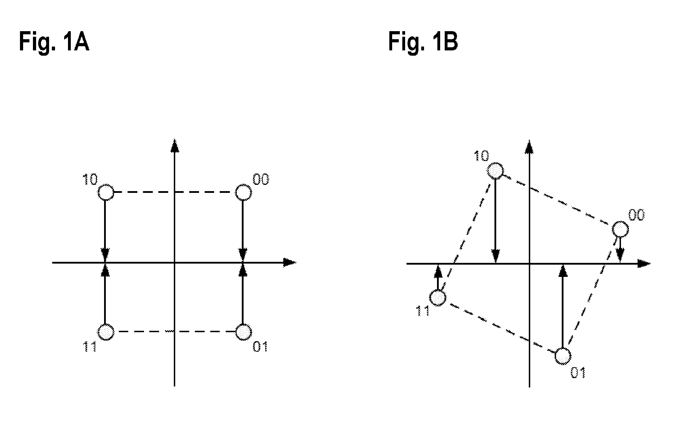

An example constellation with D=2 and 8=1 is illustrated in Fig. 1A. This two-dimensional constellation has 4 constellation points that encode the binary values 00, 01, 10, and 11, corresponding to the alphabet of the symbols to be transmitted. Since *B=1,* each dimension is modulated by a single bit with value "0" or "1". The "dimension" is rather an abstract concept, which corresponds to a physical real-valued modulation symbol. The two-dimensional constellation of Fig. 1A corresponds, for instance, to a Quadrature Amplitude Modulation constellation of size 4, also abbreviated as 4-QAM, in which the two dimensions (horizontal and vertical axes) can correspond to the real and imaginary components of a complex symbol.

In traditional, i.e. non-rotated constellations, such as QAM, each transmitted bit modulates only one dimension, since each transmitted bit determines the position of the constellation point in a single dimension (vertical and horizontal axis which may correspond, for instance, to real or imaginary axis). If that dimension undergoes a deep fading, all bits that modulate it will be extremely unreliable, which increases the error probability. This effect is illustrated by the errors in Fig. 1 A. If the dimension represented by the vertical axis fades away, constellation points 00 and 01, and constellation points 10 and 11 will be indiscernible.

If the constellation is modified such that each bit affects more or all dimensions, the resilience to fading is increased. A deep fade on one of the dimensions will affect all the bits of the constellation, but the overall effect would be less bad than in the previous case, so that, on average, the error probability decreases. This is referred to in the literature as modulation diversity.

One way to achieve modulation diversity is to rotate a constellation to spread the effect of a channel fade over all its dimensions. This is illustrated in Fig. 1 B for the case with D=2 and 8=1, wherein the constellation points remain discernible even after a deep fade of the channel represented by the vertical axis (illustrated by vertical arrows which all fall into different positions of the horizontal axis and are therefore distinguishable even if the vertical axis faded away).

A multi-dimensional rotation can be achieved by multiplying D-element real-valued signal vectors by a *DxD* square matrix. The necessary and sufficient condition for a square matrix R to be a rotation matrix (or a reflection matrix) is for it to be orthogonal, i.e.

$$R R^{T} = I$$

wherein square matrix I is an identity matrix of size *DxD*, i.e. which has ones on the main diagonal and zeros elsewhere. This means that the rows/columns must be orthogonal unit vectors, i.e.

$$\sum_{i=1}^{D} r_{i,j} \cdot r_{i,k} = \delta_{j,k}$$

with $\delta_{j,k}$ =1 if *j=k,* and $\delta_{j,k}$=0 if *j≠k.* When $\delta_{j,k}$ =1 , such orthogonal transformation is called orthonormal, which may be beneficial for some implementations since it maintains the power of the signal.

An orthogonal transformation preserves proportionally the Euclidean distance between any two points of the constellation and ensures that the performance in channels with additive white Gaussian noise (AWGN channels) is not affected.

Obviously, not all rotations yield the same improvement in modulation diversity. For example, the article "Modulation Scheme Designed for the Rayleigh Fading Channel" by K. Boulle and J. C. Belfiore, CISS 1992, claims that the optimum rotation angle $\theta$ for 16-QAM is $\pi/8$. The corresponding 2-D rotation matrix is

$$\begin{pmatrix} +\cos\theta & -\sin\theta \\ +\sin\theta & +\cos\theta \end{pmatrix}.$$

As illustrated in Fig. 1A, the effect of the rotation by this matrix (shown with $\theta$ other than ($\pi/8$) is identical to a rotation in a physical plane (signal plane).

Finding the optimum rotation for constellations of more than two dimensions is more complicated because there is no single optimization parameter such as the rotation angle in 2-D. In the case of a 4-D constellation, for example, there are six independent rotation angles, each with its own partial rotation matrix. The partial rotation angles are also called Givens angles in the literature. The final 4-D rotation matrix is obtained by multiplying the 6 Givens rotation matrices, namely

$$R_4^{1,2} = \begin{bmatrix} +\cos\theta_{1,2} & -\sin\theta_{1,2} & 0 & 0 \\ +\sin\theta_{1,2} & +\cos\theta_{1,2} & 0 & 0 \\ 0 & 0 & 1 & 0 \\ 0 & 0 & 0 & 1 \end{bmatrix} \qquad R_4^{1,3} = \begin{bmatrix} +\cos\theta_{1,3} & 0 & -\sin\theta_{1,3} & 0 \\ 0 & 1 & 0 & 0 \\ +\sin\theta_{1,3} & 0 & +\cos\theta_{1,3} & 0 \\ 0 & 0 & 0 & 1 \end{bmatrix}$$

$$R_4^{1,4} = \begin{bmatrix} +\cos\theta_{1,4} & 0 & 0 & -\sin\theta_{1,4} \\ 0 & 1 & 0 & 0 \\ 0 & 0 & 1 & 0 \\ +\sin\theta_{1,4} & 0 & 0 & +\cos\theta_{1,4} \end{bmatrix} \qquad R_4^{2,3} = \begin{bmatrix} 1 & 0 & 0 & 0 \\ 0 & +\cos\theta_{2,3} & -\sin\theta_{2,3} & 0 \\ 0 & +\sin\theta_{2,3} & +\cos\theta_{2,3} & 0 \\ 0 & 0 & 0 & 1 \end{bmatrix}$$

$$R_4^{2,4} = \begin{bmatrix} 1 & 0 & 0 & 0 \\ 0 & +\cos\theta_{2,4} & 0 & -\sin\theta_{2,4} \\ 0 & 0 & 1 & 0 \\ 0 & +\sin\theta_{2,4} & 0 & +\cos\theta_{2,4} \end{bmatrix} \qquad R_4^{3,4} = \begin{bmatrix} 1 & 0 & 0 & 0 \\ 0 & 1 & 0 & 0 \\ 0 & 0 & +\cos\theta_{3,4} & -\sin\theta_{3,4} \\ 0 & 0 & +\sin\theta_{3,4} & +\cos\theta_{3,4} \end{bmatrix}$$

From the article "Design of Trellis Coded QAM for Flat Fading and AWGN Channels" by B. D. Jelicic and S. Roy, IEEE Transactions on Vehicular Technology, Vol. 44, Feb. 1995, it is known that the optimization may be carried out over the 6-element vector $\theta = (\theta_{1,2}, \theta_{1,3}, \theta_{1,4}, \theta_{2,3}, \theta_{2,4}, \theta_{3,4})$. According to this article, the resulting optimum angles for a 4-D constellation with two bits per dimension are: (39°, 25°, 43°, 53°, 41 °, 23°).

An alternative approach to the design of rotation matrices is known from EP 2 288 048 A for dimensions D which are integer multiples of four. Accordingly, the design of the rotation matrices only depends on a single parameter r, referred to as rotation factor, which enables a more efficient optimization of this parameter. An example of such a matrix for D=4 is shown below.

$$R_4 = \begin{bmatrix} +a & -b & -b & -b \\ +b & +a & -b & +b \\ +b & +b & +a & -b \\ +b & -b & +b & +a \end{bmatrix}$$

The coefficients a and b are not independent. They depend of the rotation factor r as follows:

$$b = \sqrt{\frac{r}{D}} \quad a = \sqrt{1 - \frac{r(D-1)}{D}}$$

There are also other approaches and other examples of orthogonal transformation matrices.

After the rotation transformation, the transformed symbols may be transmitted using any of the available techniques for mapping the symbols onto the physical resources of the transmission channel.

## SUMMARY OF THE INVENTION

It is the object of the present invention to provide an efficient approach to mapping the rotated symbols onto the transmission resources.

This is achieved by the features as set forth in the independent claims.

Preferred embodiments are the subject matter of the dependent claims.

It is the particular approach of the present invention to utilize the diversity of separate frequency channels by mapping components of a rotated coded modulation constellation point onto different frequency channels as uniformly as possible.

Thanks to the increased diversity, the performance of the system may be improved.

In accordance with an aspect of the present invention, a method is provided for transmitting digital data encoded with a forward error correction code over a plurality, N, of frequency channels. The method comprises mapping a bit stream encoded with the forward error correction code to a sequence of real-valued symbols; transforming vectors of D real-valued symbols from said sequence by multiplying said vector with an orthogonal matrix, resulting in D real-valued transformed symbols; and mapping the D transformed symbols of each vector onto said N frequency channels, such that the D symbols are in essence evenly distributed over the N frequency channels.

In accordance with another aspect of the present invention a method is provided for receiving digital data encoded with a forward error correction code over a plurality, N, of frequency channels. The method comprises receiving transformed symbols from said N frequency channels; demapping from the received transformed symbols vector-wise D transformed symbols, which are substantially evenly distributed over the N frequency channels, into respective sequences of D real-valued transformed symbols; and processing the D transformed symbols including inverse transforming them and demapping them to a bitstream to be provided for forward error correction decoding.

In accordance with another aspect of the present invention an apparatus is provided for transmitting digital data encoded with a forward error correction code over a plurality, N, of frequency channels. The apparatus comprises a multiplexer for mapping a bit stream encoded with the forward error correction code to a sequence of real-valued symbols, a transformation unit for transforming vectors of D real-valued symbols from said sequence by multiplying said vector with an orthogonal matrix, resulting in D real-valued transformed symbols, and a mapping unit for mapping the D transformed symbols of each vector onto said N frequency channels, such that the D symbols are in essential evenly distributed over the N frequency channels.

In accordance with another aspect of the present invention an apparatus for receiving digital data encoded with a forward error correction code over a plurality, N, of frequency channels. The apparatus comprises a receiver for receiving transformed symbols from said N frequency channels; a demapping unit for demapping from the received transformed symbols vector-wise D transformed symbols, which are in essential evenly distributed over the N frequency channels, into respective sequences of D real-valued transformed symbols; and a signal processing unit for processing the D transformed symbols including inverse transforming them and demapping them to a bitstream to be provided for forward error correction decoding.

Preferably, the symbols mapped onto the *N* frequency channels are transmitted and/or received with no time overlap between any two of the *N* channels. This corresponds to time-frequency slicing.

Advantageously, the *D* transformed symbols are mapped onto *D* complex symbols prior to their mapping onto the *N* frequency channels. In particular, the D complex symbols may be adjacent, which leads to a particularly compact mapping that is especially suitable for further mapping onto the channels by simple demultiplexing.

According to an embodiment of the present invention, the *D* transformed symbols are mapped to the *D* adjacent complex symbols by mapping the *D* transformed symbols to *D/2* adjacent complex symbols and introducing a shift of *D/2* symbols between the real and the imaginary components of the *D/2* complex symbols.

According to another embodiment of the present invention, the mapping of the *D* transformed symbols to the *D* adjacent complex symbols is performed by mapping a first vector of *D* transformed symbols to *D* adjacent complex symbols and mapping a second vector of *D* transformed symbols to the same *D* adjacent complex symbols.

Preferably, the step of mapping said complex symbols onto the *N* frequency channels is performed by sequentially demultiplexing the complex symbols to the *N* channels, in particular by alternately demultiplexing the complex symbols into the N channels.

In accordance with another aspect of the present invention, a computer program product comprising a computer-readable medium having a computer-readable program code embodied thereon is provided, the program code being adapted to carry out the present invention.

The above and other objects and features of the present invention will become apparent from the following description of preferred embodiments in conjunction with the accompanying drawings in which:

Figure 1A    is a schematic drawing illustrating an example two-dimensional constellation and the effect of fading;

Figure 1B    is a schematic drawing illustrating an example two-dimensional constellation obtained by rotating the constellation of Figure 1A and the effect of fading thereon;

Figure 2    is a block diagram showing an example of a bit-interleaved coding and modulation encoder;

Figure 3    is a block diagram showing an example of a transmitter in accordance with an embodiment of the present invention;

Figure 4    is a schematic drawing illustrating time frequency slicing with four frequency channels, showing the order in which the data slices are received by a receiver;

Figure 5    is a schematic drawing illustrating an example of mapping the four dimensions (real symbols) of a 4-D rotated constellation onto four complex symbols in accordance with an embodiment of the present invention;

Figure 6    is a schematic drawing illustrating an example of mapping the four dimensions (real symbols) of a 4-D rotated constellation onto four complex symbols, in accordance with an embodiment of the present invention;

Figure 7A    is a schematic drawing showing the sequential mapping of the complex symbols of Figure 6 onto two frequency channels;

Figure 7B    is a schematic drawing showing the sequential mapping of the complex symbols of Figure 6 onto three frequency channels;

Figure 7C    is a schematic drawing showing the sequential mapping of the complex symbols of Figure 6 onto four frequency channels;

Figure 8    is a block diagram illustrating an example of a decoder capable of decoding signal encoded by an encoder of Figure 3 in accordance with an embodiment of the present invention; and

Figure 9    is a flow chart illustrating an example of a method for encoding and decoding a signal in accordance with an embodiment of the present invention.

## DETAILED DESCRIPTION

The present invention provides an approach to such an efficient mapping of rotated real-valued symbols onto frequency channels as will be described below based on some exemplary configurations.

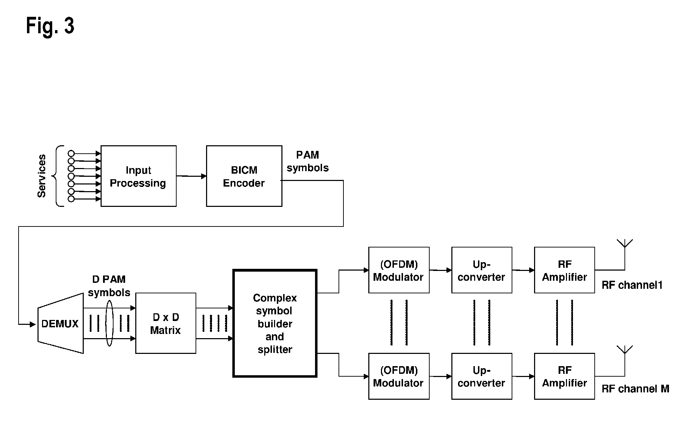

The present invention may be applicable to various communication systems. An example of a transmitter chain that applies the present invention is shown in Figure 3.

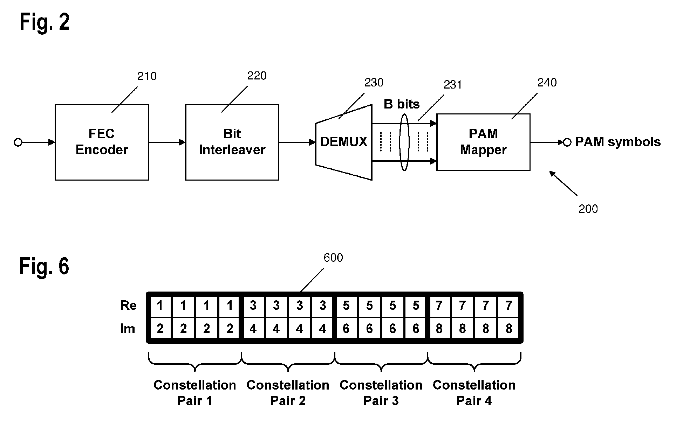

Figure 2 is a block diagram of a bit-interleaved coded modulation (BICM) encoder, which is a component of the transmitter chain shown in Figure 3. The input blocks are encoded by a forward error correction (FEC) encoder 210 and fed to an optional bit interleaver 220, which applies a permutation to the bits of the FEC codeword. For example, the FEC code can be a low-density parity-check (LDPC) code or a turbo code. The input blocks may contain any kind of binary data. In the case of digital broadcasting, for instance, the blocks carry digital services or programs, and are sometimes referred to as baseband frames.

The bits of the bit-interleaved FEC codeword are then demultiplexed by a demultiplexer 230 into groups of B bits 231, each group modulating 240 a real-valued (i.e. without imaginary component) pulse amplitude modulation (PAM) symbol. It is noted that here the term PAM refers to a discrete value from the alphabet of predefined number of values. The term "modulation" does not necessarily mean modulation onto a carrier signal which is to be transmitted. Thus, PAM symbols here may refer to discrete real-valued symbols processed in the baseband. The number B represents the number of bits encoded in a single PAM symbol also called symbol bit-depth, and directly determines the spectral efficiency of the system.

Figure 3 is a block diagram of a transmitter-side communication chain involving the bit interleaved coding and modulation 200 of Figure 2. The input processing unit 310 formats the input bit streams into block of a predetermined length.

The input bit streams may be, for instance, bit streams of different broadcast services in a digital broadcast system such as digital video broadcast (DVB) systems. However, the input processing may also receive one single bit stream and the system may be any (terrestrial, satellite or cellular; wireless or cable) transmission system for transmitting digital signals.

The input processing unit 310 segments the input bitstreams and forwards the resulting blocks to the BICM encoder 200, which comprises a forward error correction coding (FEC) coder and possibly a bit-interleaver, after which the bits are grouped into PAM symbols. The blocks produced by the input processing 310 may correspond for instance, to baseband frames of a DVB system. The BICM encoder 200 converts the data blocks into a plurality of real-valued pulse amplitude modulation (PAM) symbols as already described to reference Figure 2.

The real-valued PAM symbols are then grouped into vectors of $D$ symbols. The number $D$ can be regarded as the number of dimensions of a generalized $D$-dimensional constellation. Each vector of $D$ PAM symbols is then input to transformation unit 320, where it is multiplied by a real-valued orthogonal matrix $R$ of size $DxD$. This matrix represents a rotation of the generalized multi-dimensional constellation vector. The rotated vector of $D$ transformed real-valued symbols enters then the complex symbol builder and splitter unit 330 (mapping unit, mapper). In the complex symbol builder and splitter 330, the vector $D$ of the real-valued symbols is mapped to complex symbols and split into complex data streams to be mapped onto the transmission resources, in particular onto a plurality, $N,$ of frequency channels. The number $N$ is an integer larger than 1. The present invention provides an efficient approach to such building and splitting of the rotated symbol vectors, according to which the complex data symbols are produced and split into the $N$ substreams mapped onto corresponding $N$ radio frequency (RF) channels over which the transmission is carried out.

The solutions disclosed in the present invention are particularly advantageous for generalized constellations with more than two dimensions.

The processing of each of the complex data substreams may further include a modulation such as orthogonal frequency division modulation (OFDM) 340A to 340X which may further include time and/or frequency interleaving to further increase diversity; up-converting the digital baseband signal to analog radio-frequency signal 350A to 350X and amplifying the resulting analog radio-frequency signal with an RF power amplifier 360A to 360X.

One of the approaches for increasing the diversity of a transmission system is the exploitation of the frequency diversity available on a plurality of radio-frequency channels. The increase in frequency diversity is enabled by the fact that typically fading in wireless channels tends to be frequency-selective and thus fading on the different RF channels has a rather low correlation.

Furthermore, if the transmitters for the different radio-frequency channels are located in different geographical locations, the degree of correlation is even lower and the present invention is even more advantageous. In this case, also the so-called spatial diversity is exploited.

In order to explore the available diversity, the bits of each forward error correction (FEC) block are preferably split as uniformly as possible among the available radio-frequency channels. This enables the FEC decoder to correct the distributed errors and leads to a lower error probability after decoding.

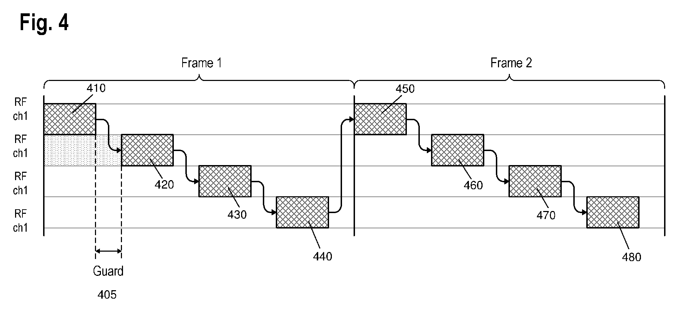

Figure 4 shows a so-called time-frequency slicing (TFS) configuration, which is particularly suitable for deployment within digital broadcast networks. In broadcast systems it is advantageous when the receiver only employs a single RF tuner because that reduces the receiver costs. In order to enable the reception of a program with a single tuner, it is necessary for that program to be transmitted over a single radio frequency channel at any given time. However, it is also advantageous to transmit on different frequency channels in order to exploit the frequency and if available the spatial diversity. This can be achieved in that the receiver hops between different frequencies and extracts the desired data from each radio frequency channel during the appropriate time slice. This is illustrated in Figure 4, where RF ch 1, RF ch 2, RF ch 3, and RF ch 4 represent four radio frequency channels and the horizontal axis is a time axis.

Usually, in digital communication systems the transmission is organised in so-called frames. Figure 4 shows frame 1 and frame 2 in which respective data slices 410, 420, 430, 440 and 450, 460, 470, 480 are transmitted. As can be seen, each program is transmitted within the frame on different frequencies and at different times (time-frequency slicing) than the other programs. In order to allow the tuner to hop between two radio frequency channels a guard interval 405 is typically required. The guard interval is typically selected based on the time duration necessary for the receiver to hop onto a different frequency channel and achieve synchronization.

The present invention provides a method for mapping digital data encoded with a forward error correction code onto $N$ frequency channels. The method may comprise receiving a FEC encoded bitstream from previous processing elements (units) and mapping the bitstream to a sequence of real-valued pulse amplitude modulation symbols. Then, the method applies grouping of the modulation symbols into vectors of $D$ elements and transforms each vector through multiplication with an orthogonal matrix (of size $DxD$). The $D$ symbols of each transformed vector are then mapped onto said N frequency channels, so that the number of symbols from each vector transmitted over a frequency channel is the same for all channels, apart for one symbol. This means that the distribution of the $D$ symbols onto the $N$ frequency channels is as uniform as possible. When $D$ is an integer multiple of $N$, a perfectly uniform and balanced distribution is possible since exactly $D/N$ symbols are mapped onto each of the $N$ channels. However, if $D$ is not an integer multiple of $N$ a fully uniform distribution is not possible. In such case, according to the present invention the symbols are mapped onto the N channel in essential uniformly. This is the case, for instance, when the number of symbols (symbols from the D transformed symbols) mapped onto different channels differs at most by one.

This approach provides the advantage of increasing the diversity by utilizing the uncorrelated (weakly correlated) features of different frequency channels. In case the quality of reception on an RF channel is bad, only those constellation dimensions that are mapped onto the bad frequency channel are faded. If the mapping of the constellation dimensions onto the RF channels is uniform, all constellations will have almost the same number of faded dimensions. The faded dimensions are those mapped onto the bad channel. If the mapping is not very uniform, some constellations will have more dimensions faded than others. The degradation of the error rate in the former (uniform) case is lower than in the latter (less uniform) case. It is therefore obvious that by ensuring a uniform mapping of the constellation dimensions on to the available frequency channels the error rate is reduced.

Preferably, the modulated data (i.e. the transformed symbols) are transmitted sequentially in time, meaning that the data slices (consisting of mapped symbols) on the N frequency channels do not overlap. Accordingly, there may also be guard periods provided between the data slices. Thus, a receiver having a single RF tuner needs to follow the data slices by cyclically hopping from one RF channel to the next.

With reference to Figure 3 representing an embodiment of the present invention, the mapping 330 includes the rotation of PAM symbol vectors, followed by mapping onto time-frequency slices. In particular, the $D$ dimensions of a rotated constellation are mapped onto possibly different radio frequency channels. The PAM symbols after transformation 320 are typically mapped to complex symbols, then split (mapped) to $N$ radio frequency channels. This step is performed by the complex-symbol builder and splitter 330. In the following, examples of complex-symbol building and splitting are described.

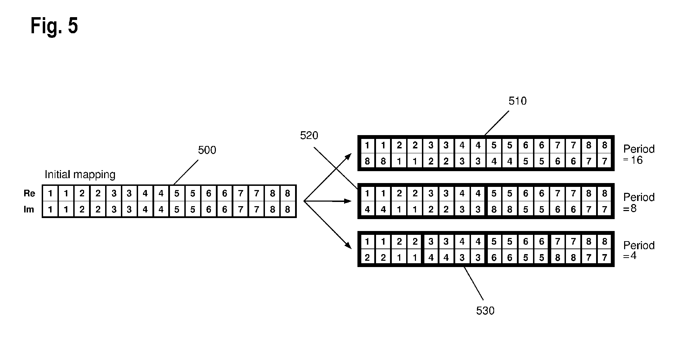

The first example represents the mapping of the $D$ respective symbols of the transformed vectors (or dimensions of the rotated generalized constellations) onto the $N$ channels including mapping the $D$ real-valued symbols (constellation dimensions) of the transformed vector onto $D/2$ complex symbols and applying a relative cyclic delay of at least D/2 symbols between the real and the imaginary components of the $D/2$ complex symbols. The resulting complex symbols are then mapped onto the $N$ channels. In this example, the relative delay is exactly $D/2$ symbols, as shown in Figure 5. This particular delay value is the smallest delay value which guarantees that the mapped $D$ real-valued symbols are mapped onto D complex symbols. However, the present invention also works when the delay is larger. The larger the delay, the more memory is require din the transmitter and the receiver. The delay is typically predefined, i.e. fixed in the system. Alternatively, the delay may be configurable or variable in accordance with certain transmission parameters and settings.

The D real-valued transformed symbols may be understood as $D$ real-valued dimensions of a single generalized constellation. A complex symbol is a symbol including two components, real and imaginary, i.e. two real-valued symbols may be mapped on a single complex symbol by assigning one of the real-valued symbols to the real component of the complex symbol and assigning the other real-valued symbol to the imaginary component of the complex symbol.

Figure 5 exemplifies the mapping of 8 four-dimensional constellations denoted "1" to "8" onto complex symbols, with cyclic delay periods of 4, 8 and 16 respectively. In particular, quadruples (rotated vectors with four elements, $D=4$) of the transformed symbols are first mapped onto pairs of adjacent complex symbols sequentially, as shown schematically by the rectangle 500. The top row in the rectangle 500 shows the real components and the bottom row shows the imaginary components of the sequence of complex symbols. For instance, the first four real-valued components denoted by "1" are mapped onto the first two real and first two imaginary components. Similarly, the following quadruples of real valued components denoted by "2", "3",..."8", are mapped onto the respective pairs of adjacent complex values in a similar way. This mapping may be performed, for instance, sequentially onto the real and imaginary components of the complex symbols, i.e. mapping first real-valued symbol onto the real component of the first complex symbol, then the second real-valued symbol onto the imaginary component of the first complex symbol, then the third real-valued symbol onto the real component of the second complex symbol, etc. However, this is only an example and mapping may be performed also in another way.

Once the "initial mapping" 500 as described above has been performed, the real and the imaginary components of the complex symbols are cyclically delayed with respect to each other. Figure 5 shows three different examples 510, 520 and 530 of such a cyclic delay insertion. In the first example, the period of the cyclic delay is 16. This is illustrated by a rectangle 510. In the second and third example the period of the cyclic delay is 8 and 4 respectively, as illustrated by rectangles 520 and 530 respectively.

It is noted that the description of the above mapping including the initial mapping of the $D$ real-valued symbols onto the $D/2$ complex symbols and then inserting the delay is only to illustrate one way in which the transformed real-valued symbols are mapped (split) onto the frequency channels. The implementation of this embodiment does not necessarily include these two steps and may be performed in a single step by defining the mapping of the D real-valued symbols with a predetermined period onto the complex symbols, or even directly onto the respective frequency channels as will be shown later. The mapping may be implemented by a look-up table or be hard wired. The present invention is not limited by the way of implementing this mapping. It provides the mapping which is advantageous since it enables the exploiting of the diversity of the frequency channels and thus the increasing of the diversity.

The present invention is also not limited to the mapping of rotated symbol vectors on complex symbols as described above. Any other mapping may also be selected.

For instance, Figure 6 illustrates another example of an advantageous mapping. This mapping includes selecting pairs of real-valued rotated constellation vectors. The mapping onto complex symbols is performed by mapping the $D$ symbols of the first constellation vector to the real components of the first four complex symbols and by mapping the $D$ symbols of the second constellation vector to the imaginary components of the same four complex symbols. The approach is repeated for the subsequent constellation vectors and complex symbols.

Summarizing, the step of mapping the $D$ components of the constellation vectors to complex symbols has to ensure that the $D$ components of each constellation vector are mapped onto $D$ adjacent complex symbols.

Then, the next step to be performed by the complex symbol builder and splitter 330 (mapper) is the mapping (splitting) of the complex symbols onto the radio frequency channels. This step does not need to be performed separately from the previous step of mapping real-valued symbols onto complex symbols. Both steps may also be performed jointly as described above.

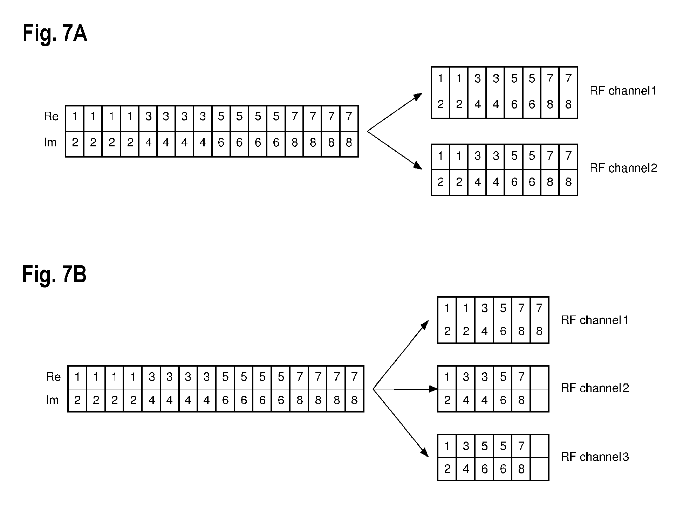

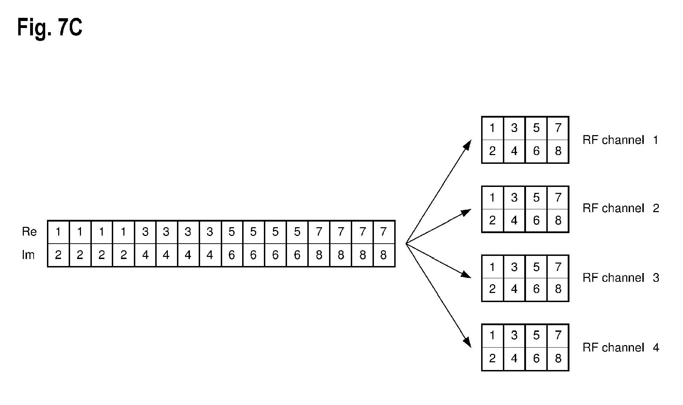

In accordance with an embodiment of the present invention the step of mapping (splitting) the complex symbols onto radio frequency channels is preformed by simply demultiplexing the stream of complex symbols to the $N$ radio frequency channels sequentially. When considering the second example described above with reference to Figure 6, in which the $D$ dimensions of each constellation point are mapped to D adjacent complex symbols, the $D$ components are distributed as uniformly as possible to different radio frequency channels. Even in the case in which D is larger than the number of RF channels $N$, such a splitting is sufficiently uniform. Figure 7 shows examples of mapping the complex symbols of Figure 6 onto 2, 3 and 4 RF channels respectively.

In particular, Figure 7A shows a block of complex symbols 600 mapped onto two radio frequency channels 621 and 622. In this case, each radio frequency channel contains exactly 2 dimensions (components) of each generalized constellation, i.e. two real-valued symbols of the transformed $D$ symbols belonging to the transformed vector of real-valued symbols. The demultiplexing maps the complex symbols 600 (it could also be the complex symbols 500) alternately onto the two channels.

Figure 7B shows a block of complex symbols 600 mapped onto three RF channels 631, 632 and 633. In this case, each RF channel includes either one or two dimensions (components) of each generalized constellation (one or two of the D transformed symbols of the rotated vector). As can be seen in Figure 7B, the first RF channel includes two dimensions from the first constellation, whereas the remaining two RF channels contain only one dimension from the first constellation. Each of the channels includes repetitions of complex symbols with components from the same generalized constellation point. For instance, RF channel 1 includes two (1,2) complex symbols, RF channel 2 includes two (3,4) symbols, and RF channel 3 includes two (5,6) symbols. Thus, the RF channel that contains two constellation components also changes cyclically, so the mapping is balanced on average.

A further aspect, which can be seen in Fig 7B, is that the first RF channel 631 includes one complex symbol more than RF channels 2 and 3. If the number of complex symbols in a block 600 is not a multiple of $N$, then padding complex symbols may be inserted on some channels to ensure that each channel has the same number of complex symbols. In Figure 7B, the symbols to be padded are the respective last symbols in RF channel 2 and 3. This aspect is not relevant to the present invention, however.

Figure 7C shows a block of complex symbols 600 mapped onto four RF channels 641, 642, 643 and 644. In this example, the mapping results in each RF channel carrying exactly one dimension of each generalized constellation.

After splitting the complex symbols, as already described with reference to Figure 3, the symbols of each channel may be modulated, converted to an analog signal, amplified and transmitted.

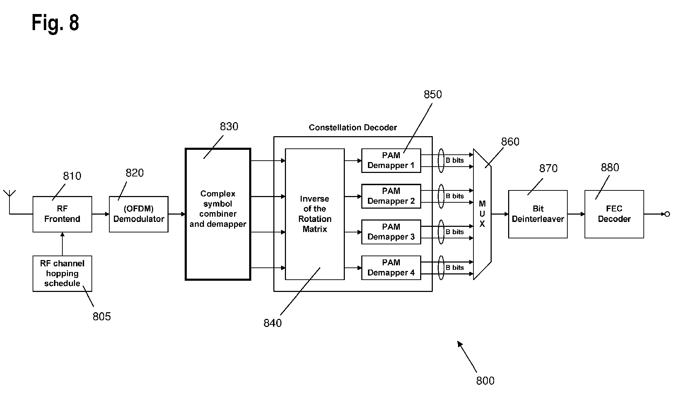

Figure 8 illustrates an example of a receiver 800 capable of receiving digital signal transmitted by the transmitter of Figure 3. The signal transmitted is received by an antenna and provided to a radio-frequency frontend, which typically comprises a tuner and a down-converter for converting the received signal into digital baseband signal. The RF frontend 810 may be controlled by a channel hopping schedule 805, the schedule being typically signaled to the receiver by the transmitter. However, the schedule may also be predefined in the same way as the receiver and the transmitter or generated based on a predefined pseudo-random sequence. The digital baseband signal obtained from the RF frontend 810 is then demodulated by a demodulator 820 such as an OFDM demodulator, resulting in a stream of complex symbols and associated channel fading coefficients. The channel fading coefficients are typically obtained by measuring the received power of predefined pilot signals transmitted together with the data.

The demodulated complex symbols from the $N$ RF channels are then combined and the generalized constellation vectors are extracted (demapped) from the complex cells. This is performed by the combiner and demapper 830. The $D$ transformed real-valued symbols forming the generalized constellation vector are multiplied (transformed) by a rotation matrix 840 which is the inverse matrix to the orthogonal matrix applied at the encoder. The real-valued PAM symbols of the de-rotated constellation vector are demapped 850, $B$ bits being extracted from each of the D components. The resulting bits are multiplexed 860, maybe de-interleaved 870 and passed to FEC decoder 880 which decodes the bit stream to correcting possible errors. The bits produced by the PAM symbol demapper can be hard bits (0 or 1) or "soft" values, indicating probabilities. This aspect is well known by any person skilled in the art.

The example receiver of Figure 8 has a structure which mirrors the corresponding blocks in Figure 3 of the transmitter. Accordingly, the constellation demapping is performed by first de-rotating the constellation and then demapping the bits for each dimension separately. This approach is the most simple, but its performance is suboptimal. The performance may be even worse for rotated constellations than for non-rotated constellations. Due to its simplicity, this solution may be used in some low-cost receivers.

Another possibility is to demap the bits of all dimensions in one step. In particular, it may be advantageous to perform maximum likelihood (ML) decoding in which the inverse rotation matrix transformation and the PAM demapping are performed jointly. This solution is more complex, but offers much better performance in terms of Bit Error Rate (BER) at a given Signal to Noise Ratio (SNR). In the following, this solution will be described in greater detail.

Like for the transmitter, a preferred embodiment includes a FEC decoder after the constellation demapping, with the optional bit deinterleaver in between, as shown in Fig. 8. More exactly, the rotated constellation demapping receives $D$-dimensional symbols y and the associated (estimated) fading coefficients $h$ and from each symbols it extracts $NxB$ bits.

When FEC decoding is used, the constellation demapping can no longer be performed by doing a hard decision (direct decision between "0" and "1") because the performance of the error correction would be suboptimal. Instead, "soft bits" must be used, either in the form of probabilities or in the form of log-likelihood ratios (LLR). The LLR representation is preferred because probability multiplications can be conveniently expressed as sums. By definition, the LLR of a bit $b_k$ is

$$L(b_k|\mathbf{y}) \triangleq \ln \frac{P(b_k = 1|\mathbf{y})}{P(b_k = 0|\mathbf{y})}$$

where $P(b_k=0|y)$ and $P(b_k=1/y)$ are the a-priori probabilities that $b_k = 0/1$ was transmitted when y is received. According to the known theory, the LLR of a bit $b_k$ of a constellation has the following exact expression:

$$L(b_k) = \ln \frac{\sum\limits_{\mathbf{s} \in \mathcal{S}_k^1} \exp\left(-\frac{\|\mathbf{y} - \mathbf{Hs}\|^2}{2\sigma^2}\right)}{\sum\limits_{\mathbf{s} \in \mathcal{S}_k^0} \exp\left(-\frac{\|\mathbf{y} - \mathbf{Hs}\|^2}{2\sigma^2}\right)}$$

where k is the bit index, y is the received symbol vector, $H$ is the diagonal matrix with the associated fading coefficients, s is a constellation point, $//*//^2$ is the squared norm, and $\sigma^2$ is the noise variance. For an *N*-dimensional constellation, the squared norm represents the Euclidean distance from the received symbol *y* to the faded constellation symbol **Hs** in the N-dimensional space and has the following expression.

$$\|\mathbf{y} - \mathbf{Hs}\|^2 = \sum_{n=1}^{N} |y_n - h_n s_n|^2$$

Each bit $b_k$ divides the constellation into two partitions of equal size, $S_k^0$ and $S_k^1$, corresponding to those points for which $b_k$ is 0 and 1 respectively.

The exact expression for the LLR is difficult to calculate due to the exponentials, divisions and the logarithm. In practice, the following approximation is made, called max-log, which introduces negligible errors:

$$\ln(e^{a_1} + e^{a_2}) \approx \max(a_1, a_2) \rightarrow \ln(e^{-a_1} + e^{-a_2}) \approx \min(a_1, a_2)$$

This leads to a much more simple expression for the LLR:

$$L(b_k) \approx \frac{1}{2\sigma^2} \min_{\mathbf{s} \in \mathcal{S}_k^0} \|\mathbf{y} - \mathbf{Hs}\|^2 - \frac{1}{2\sigma^2} \min_{\mathbf{s} \in \mathcal{S}_k^1} \|\mathbf{y} - \mathbf{Hs}\|^2$$

For each received symbol *y* the distances to all $2^{B \cdot N}$ constellation points must be computed, and the corresponding minimum for each partition determined.

For each received point *y*, the counter iterates over all constellation points. The constellation points are selected from a look-up table using the counter value as an index and the associated squared Euclidean distance is then computed with a dedicated sub-block. For each bit, the corresponding minimum squared distances for the two partitions are maintained. The two constellation partitions for each bit are simply indicated by the corresponding bit of the counter. Possible implementations of an ML demapper and decoder, which may form parts of an embodiment of the present invention, are shown in Figures 7 to 11 of from EP 2 288 048 A.

A significant improvement in the receiver performance can be achieved by using iterative decoding, whereby the constellation demapping and the FEC decoding are connected in a loop (cf. Fig. 10 of EP 2 288 048 A) .

The deinterleaved difference between the output and the input to the FEC decoding, $L_E$, is called extrinsic information and is fed back to the demapper in order to aid the demapping process. In this case it is essential that the FEC decoding produces soft bits, e.g. in the form of $LLR_S$.

As known in the literature, the formula for computing the LLR for bit $b_k$ is given by

$$L(b_k) \approx \min_{\mathbf{x} \in \mathcal{X}_k^0} \left\{ \frac{1}{2\sigma^2} \|\mathbf{y} - \mathbf{Hs(x)}\|^2 + \sum_{\substack{i=1 \\ x_i=1, i \neq j}}^{K} L_E(b_i) \right\}$$

$$- \min_{\mathbf{x} \in \mathcal{X}_k^1} \left\{ \frac{1}{2\sigma^2} \|\mathbf{y} - \mathbf{Hs(x)}\|^2 + \sum_{\substack{i=1 \\ x_i=1, i \neq j}}^{K} L_E(b_i) \right\}$$

where x represents the K = NB bits associated with each constellation point and $X_k^0$ and $X_k^1$ represent the two constellation partitions associated with bit k, each constellation point being represented by the NB bits instead of the N integer coordinates. Furthermore, s is expressed as s(x) and represents the constellation mapping function.

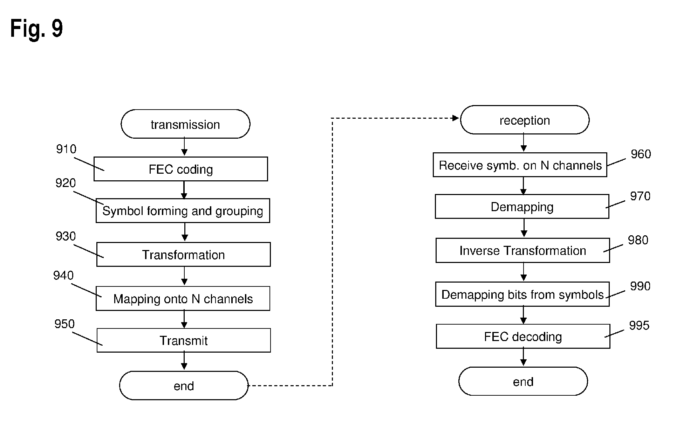

Figure 9 shows a flow chart exemplifying a method for transmitting and a method for receiving data according to an embodiment of the present invention. Accordingly, a data stream is first provided to an FEC encoder and encoded 910. The data stream may be any digital stream including text, audio, video or any other information. The forward error correction coding may be any coding including block or convolutional codes, which may be concatenated to form a turbo code. For instance, LDPC codes or turbo codes may be beneficial. However, the present invention is not limited to any particular coding or coded modulation. The coded bitstream is then joined 920 into data symbols, for instance by organizing B neighbouring bits into respective symbols. The data symbols are then grouped 920 to form vectors of a predetermined number of symbols (D). The vectors are further transformed by an orthogonal transformation 930. The transformed vector is then mapped 940 onto N channels so as to possibly uniformly distribute the symbols of the same vector onto different channels. The mapped symbols are transmitted 950 including modulation on the system carrier(s), digital-analogue conversion, pulse forming and/or amplification.

At the receiving side, digital signal is received 960 from the N channels, which may include detection of the signal, analogue-to-digital conversion, and/of demodulation of the data symbols. The so obtained symbols are then demapped 970 and inverse transformed 980, wherein these two steps may be performed jointly as explained above. The back-transformed symbols are then re-grouped 990 to form a bitstream, which may be decoded 995 by a FEC decoder matched to the encoder. Steps 880 and 890 are typically performed jointly, not as separated steps.

It is noted that present invention can be readily used in broadcast systems, for instance in DVB systems such as DVB-T/T2, DVB-S/S2, DVB-H/H2 and their further developments. However, the present invention is not limited thereto and may be also employed in any other system for data transmission not only for broadcasting but also for point to point mobile or cable communications.

Another embodiment of the invention relates to the implementation of the above described various embodiments using hardware and software. It is recognized that the various embodiments of the invention may be implemented or performed using computing devices (processors) that are suitably controlled by executable instructions that cause the computing device to perform the functions according to the different embodiments of the invention described herein. A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer-readable storage media, for example RAM, EPROM, EEPROM, flash memory, registers, hard disks, CD-ROM, DVD, etc.

Summarizing, the present invention relates to transmission and reception of digital data in a communication system over a plurality of frequency channels. In particular, digital data coded with an error correcting code are split into symbols and the symbols are grouped into vectors of symbols with a predetermined length. The vectors are transformed with an orthogonal transformation. The transformed vector symbols are then mapped onto the plurality of frequency channels uniformly as far as possible. At the receiver side, a reverse processing may be applied.

## Claims

1. A method for transmitting digital data encoded with a forward error correction code over a plurality, N, of frequency channels, the method comprising the steps of:

   mapping a bit stream encoded with the forward error correction code to a sequence of real-valued symbols, transforming a vector of D real-valued symbols from said sequence by multiplying said vector with an orthogonal matrix, resulting in D real-valued transformed symbols, and mapping the D transformed symbols of each vector onto said N frequency channels, such that the D symbols are essentially evenly distributed over the N frequency channels.

2. A method for receiving digital data encoded with a forward error correction code over a plurality, N, of frequency channels, the method comprising the steps of:

   receiving transformed symbols from said N frequency channels; demapping from the received transformed symbols vector-wise D transformed symbols, which are essentially evenly distributed over the N frequency channels, into respective sequences of D real-valued transformed symbols; processing the D transformed symbols including inverse transforming them and demapping them to a bitstream to be provided for forward error correction decoding.

3. The method according to claim 1 or 2, wherein the symbols mapped onto the N frequency channels are transmitted and/or received with no time overlap between any two of the N channels.

4.  The method according to any of the claims 1 to 3, wherein the D transformed symbols are mapped onto D complex symbols prior to their mapping onto the N frequency channels.

5.  The method according to claim 4, wherein the D complex symbols are adjacent.

6.  The method according to claim 4 or 5, wherein the D transformed symbols are mapped to the D adjacent complex symbols by mapping the D transformed symbols to $D/2$ adjacent complex symbols and introducing a shift of D/2 symbols between the real and the imaginary components of the D/2complex symbols.

7.  The method according to claim 5, wherein the mapping of the D transformed symbols to the D adjacent complex symbols is performed by mapping a first vector of D transformed symbols to D adjacent complex symbols and mapping a second vector of D transformed symbols to the same D adjacent complex symbols.

8.  The method according to any of claims 1 to 7, wherein the step of mapping said complex symbols onto the N channels is performed by sequentially demultiplexing the complex symbols to the N channels.

9.  An apparatus for transmitting digital data encoded with a forward error correction code over a plurality, N, of frequency channels, the apparatus comprising:

    a symbol mapping unit for mapping a bit stream encoded with the forward error correction code to a sequence of real-valued symbols,
    a transformation unit for transforming a vector of D real-valued symbols from said sequence by multiplying said vector with an orthogonal matrix, resulting in D real-valued transformed symbols, and
    a channel mapping unit for mapping the D transformed symbols of each vector onto said N frequency channels, such that the D symbols are essentially evenly distributed over the N frequency channels.

10. An apparatus for receiving digital data encoded with a forward error correction code over a plurality, N, of frequency channels, the apparatus comprising:

    a receiver for receiving transformed symbols from said N frequency channels;
    a channel demapping unit for demapping from the received transformed symbols vector-wise D transformed symbols, which are essentially evenly distributed over the N frequency channels, into respective sequences of D real-valued transformed symbols;
    a signal processing unit for processing the D transformed symbols including inverse transforming them and demapping them to a bitstream to be provided for forward error correction decoding.

11. The apparatus according to claim 9 or 10, wherein the symbols mapped onto the N frequency channels are transmitted and/or received with no time overlap between any two of the N channels.

12. The apparatus according to any of the claims 9 to 11, wherein the D transformed symbols are mapped onto D adjacent complex symbols prior to their mapping onto the N frequency channels.

13. The apparatus according to claim 12, wherein the D transformed symbols are mapped to the D adjacent complex symbols by mapping the D transformed symbols to D/2 adjacent complex symbol.

14. The apparatus according to claim 13, wherein the mapping unit is adapted to map the $D$ transformed symbols to the $D$ adjacent complex symbols by mapping a first vector of $D$ transformed symbols to $D$ adjacent complex symbols and mapping a second vector of $D$ transformed symbols to the same $D$ adjacent complex symbols.

15. The apparatus according to any of claims 9 to 14, wherein the mapping unit is adapted to map said complex symbols onto the N channels by sequentially demultiplexing the complex symbols to the N channels.

Fig. 1A

Fig. 1B

**Fig. 2**

**Fig. 6**

# Fig. 3

# Fig. 4

**Fig. 5**

## Fig. 7A

| Re | 1 | 1 | 1 | 1 | 3 | 3 | 3 | 3 | 5 | 5 | 5 | 5 | 7 | 7 | 7 | 7 |
|----|---|---|---|---|---|---|---|---|---|---|---|---|---|---|---|---|
| Im | 2 | 2 | 2 | 2 | 4 | 4 | 4 | 4 | 6 | 6 | 6 | 6 | 8 | 8 | 8 | 8 |

| 1 | 1 | 3 | 3 | 5 | 5 | 7 | 7 |
|---|---|---|---|---|---|---|---|
| 2 | 2 | 4 | 4 | 6 | 6 | 8 | 8 |

RF channel 1

| 1 | 1 | 3 | 3 | 5 | 5 | 7 | 7 |
|---|---|---|---|---|---|---|---|
| 2 | 2 | 4 | 4 | 6 | 6 | 8 | 8 |

RF channel 2

## Fig. 7B

| Re | 1 | 1 | 1 | 1 | 3 | 3 | 3 | 3 | 5 | 5 | 5 | 5 | 7 | 7 | 7 | 7 |
|----|---|---|---|---|---|---|---|---|---|---|---|---|---|---|---|---|
| Im | 2 | 2 | 2 | 2 | 4 | 4 | 4 | 4 | 6 | 6 | 6 | 6 | 8 | 8 | 8 | 8 |

| 1 | 1 | 3 | 5 | 7 | 7 |
|---|---|---|---|---|---|
| 2 | 2 | 4 | 6 | 8 | 8 |

RF channel 1

| 1 | 3 | 3 | 5 | 7 |  |
|---|---|---|---|---|---|
| 2 | 4 | 4 | 6 | 8 |  |

RF channel 2

| 1 | 3 | 5 | 5 | 7 |  |
|---|---|---|---|---|---|
| 2 | 4 | 6 | 6 | 8 |  |

RF channel 3

# Fig. 7C

# Fig. 8

# Fig. 9

Europäisches
Patentamt

European
Patent Office

Office européen
des brevets

# EUROPEAN SEARCH REPORT

**Application Number**

EP 11 17 9179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 288 048 A1 (PANASONIC CORP [JP]) 23 February 2011 (2011-02-23) * paragraph [0017] * * paragraph [0019] * * paragraph [0023] - paragraph [0026] * * paragraph [0053] - paragraph [0055] * * paragraph [0061] * * paragraph [0082] - paragraph [0083] * * paragraph [0088] * | 1-15 | INV. H04L25/03 H04B1/713 H04L27/02 H04L27/34 |
| A | MOHAMED OUSSAMA DAMEN ET AL: "Diagonal Algebraic Space-Time Block Codes", IEEE TRANSACTIONS ON INFORMATION THEORY, IEEE PRESS, USA, vol. 48, no. 3, 1 March 2002 (2002-03-01), XP011028163, ISSN: 0018-9448 * page 632, right-hand column, paragraph 2 * | 1-15 | |
| A | DAMEN M O ET AL: "Transmit diversity using rotated constellations with hadamard transform", ADAPTIVE SYSTEMS FOR SIGNAL PROCESSING, COMMUNICATIONS, AND CONTROL SY MPOSIUM 2000. AS-SPCC. THE IEEE 2000 OCTOBER 1-4, 2000, PISCATAWAY, NJ, USA,IEEE, 1 October 2000 (2000-10-01), pages 396-401, XP010521673, ISBN: 978-0-7803-5800-3 * abstract * * page 396, right-hand column, paragraph 2 * * Section III; page 397 * * page 398, left-hand column, last paragraph * | 1-15 | TECHNICAL FIELDS SEARCHED (IPC) H04L H04B |

-/--

The present search report has been drawn up for all claims

| Place of search | Date of completion of the search | Examiner |
|---|---|---|
| The Hague | 7 February 2012 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br><br>EP 11 17 9179 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | US 2008/253431 A1 (OHBA HIDEO [JP])<br>16 October 2008 (2008-10-16)<br>* paragraph [0008] *<br>----- | 3,11 | |
| A | EP 0 722 235 A2 (MATSUSHITA ELECTRIC IND<br>CO LTD [JP]) 17 July 1996 (1996-07-17)<br>* column 17, line 54 - column 8, line 7 *<br>----- | 4-7,<br>12-14 | |
| | | | TECHNICAL FIELDS<br>SEARCHED (IPC) |

The present search report has been drawn up for all claims

| Place of search | Date of completion of the search | Examiner |
|---|---|---|
| The Hague | 7 February 2012 | Koukourlis, Sotirios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

# EP 2 566 119 A1

## ANNEX TO THE EUROPEAN SEARCH REPORT
## ON EUROPEAN PATENT APPLICATION NO.

EP 11 17 9179

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2012

| Patent document cited in search report | | Publication date | Patent family member(s) | | Publication date |
|---|---|---|---|---|---|
| EP 2288048 | A1 | 23-02-2011 | EP | 2288048 A1 | 23-02-2011 |
| | | | WO | 2011021382 A2 | 24-02-2011 |
| US 2008253431 | A1 | 16-10-2008 | JP | 2008258741 A | 23-10-2008 |
| | | | TW | 200904029 A | 16-01-2009 |
| | | | US | 2008253431 A1 | 16-10-2008 |
| EP 0722235 | A2 | 17-07-1996 | CA | 2166599 A1 | 11-07-1996 |
| | | | DE | 69631985 D1 | 06-05-2004 |
| | | | DE | 69631985 T2 | 31-03-2005 |
| | | | DE | 69636683 T2 | 06-09-2007 |
| | | | DE | 69637259 T2 | 19-06-2008 |
| | | | EP | 0722235 A2 | 17-07-1996 |
| | | | JP | 4397964 B2 | 13-01-2010 |
| | | | JP | 2009071883 A | 02-04-2009 |
| | | | US | 5774450 A | 30-06-1998 |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2288048 A

**Non-patent literature cited in the description**

• **B. D. JELICIC ; S. ROY.** Design of Trellis Coded QAM for Flat Fading and AWGN Channels. *IEEE Transactions on Vehicular Technology,* February 1995, vol. 44